# EUROPEAN PATENT APPLICATION

(11) **EP 3 211 223 A1**
(43) Date of publication of application: **30.08.2017**
(21) Application number: 17157731.5
(22) Date of filing: 23.02.2017
(51) Int. Cl.: F03D 7/02

(54) **WIND POWER SYSTEM AND METHOD FOR CONTROLLING WIND POWER SYSTEM**

(30) Priority: 26.02.2016 JP 2016035264
(71) Applicant: Hitachi, Ltd., Chiyoda-ku, Tokyo 100-8280 (JP)
(72) Inventor: KIYOKI, Souichiro, Tokyo, 100-8280 (JP); TOBINAGA, Ikuo, Tokyo, 100-8280 (JP); SAEKI, Mitsuru, Tokyo, 100-8280 (JP); SAKAMOTO, Kiyoshi, Tokyo, 100-8280 (JP)
(74) Representative: MERH-IP Matias Erny Reichl Hoffmann Patentanwälte PartG mbB

(57) **Abstract**

A wind power system which is connected to an electric power system, the system includes a rotor 1 that rotates by receiving wind, a drive train 2 that transmits power of the rotor 1, and a control apparatus 6 that controls braking force applied to the drive train 2, in which the control apparatus 6 controls the braking force to negate a vibration which occurs in the drive train 2, in a case where a voltage decrease occurs in the electric power system, and the voltage decrease is recovered within a predetermined time.

## Description

### BACKGROUND OF THE INVENTION

### 1. FIELD OF THE INVENTION

The present invention relates to a wind power system and a method for controlling the same, and particularly to a technology which is effective to be applied to a method for controlling a vibration of a drive train.

### 2. BACKGROUND ART

From the point of view of a fossil fuel exhaustion problem, a global warming problem or energy mix, social needs for renewable energy are raised. Since a cost of a wind power system is relatively low in renewable energy, introduction of the wind power system is globally advanced.

As one of the needs which are asked for the wind power system, there is a countermeasure at the time of a system accident. In a case where time of a voltage decrease caused by the system accident is short, there is a need to continue operation, and in a case where the time thereof is long, there is a need to stop power generation safely.

At the time of the normal power generation of the wind power system, a rotation speed of a drive train is retained to be substantially fixed by approximately balancing load torque due to a generator with input torque from the wind.

If the load torque of the generator sharply decreases in the system accident or the like, an imbalance occurs between the load torque of the generator and the input torque from the wind, and the rotation speed of the drive train increases. If the rotation speed excessively increases, there is a concern to damage a device such as a generator or an accelerator.

In order to mitigate the rotation speed increase of the drive train, in general, the input torque from the wind is reduced by feathering a blade of a wind turbine, the load torque is supplemented by working a brake installed in the drive train, or generator torque is raised again when a system voltage is recovered in a short time, and thereby, a countermeasure for suppressing the increase of the rotation speed is adopted. In particular, immediately after the system accident, since a pitching response of the blade is relatively slow, it is effective to greaten the load torque due to the brake or the generator.

As a background art of the present technical field, there is a technology such as that of JP-T-2009-523208. JP-T-2009-523208 discloses a technology for controlling a strong torsional vibration of a drive train caused by a sharp decrease of rotor torque, by working a mechanical brake in a case where the number of rotor rotations exceeds a preset limit value due to a gust of wind.

When the load torque of the generator sharply decreases in the system accident or the like, an axial and torsional vibration of the drive train occurs in addition to the rotation speed increase of the whole drive train. In a method of the related art, in order to suppress the rotation speed increase of the whole drive train, a method for raising the torque due to the brake or the generator as soon as possible is adopted, but the axial and torsional vibration is amplified depending on timing, and the rotation speed increases in a moment, and thereby, there is a concern of leading to the damage of the device.

For example, in JP-T-2009-523208, as illustrated in Fig. 3g, it is found out that the whole torsional vibration is shifted by intervention of the mechanical brake, meanwhile, an amplitude is amplified depending on the timing.

### SUMMARY OF THE INVENTION

An object of the present invention is to provide a wind power system that effectively suppresses an axial and torsional vibration of a drive train by applying braking force of a brake and generator torque based on measuring of timing, and has high reliability, and a method for controlling the same.

In order to solve the above problems, according to an aspect of the present invention, there is provided a wind power system which is connected to an electric power system, the system including a rotor that rotates by receiving wind, a drive train that transmits power of the rotor, and/or a control apparatus that controls braking force applied to the drive train, in which the control apparatus controls the braking force to negate a vibration which occurs in the drive train, in a case where a voltage decrease occurs in the electric power system, and the voltage decrease is recovered within a predetermined time.

According to another aspect of the present invention, there is provided a method for controlling a wind power system which is connected to an electric power system, the method including controlling braking force that is applied to a drive train to negate a vibration which occurs in the drive train of the wind power system, in a case where a voltage decrease occurs in the electric power system, and the voltage decrease is recovered within a predetermined time.

According to the aspects of the present invention, it is possible to prevent a damage of a device such as a generator or an accelerator by effectively suppressing a vibration of a drive train, when generator torque is sharply changed due to a system accident or the like.

The problems, configurations, and effects in addition to those described above will be clarified from the description of the following embodiments.

### BRIEF DESCRIPTION OF THE DRAWINGS

Fig. 1 is an outline diagram illustrating a whole of a wind power system according to an embodiment of the present invention.
Fig. 2 is a diagram illustrating a method for controlling a wind power system according to an embodiment of the present invention.
Fig. 3 is a diagram illustrating a method for controlling a wind power system according to an embodiment of the present invention.
Fig. 4 is a diagram illustrating temporal transitions of a generator rotation speed and a generator rotation acceleration speed by a torsional vibration of a drive train after a system accident.
Fig. 5A is a block diagram illustrating the method for controlling the wind power system at the time of normal operation.
Fig. 5B is a block diagram illustrating the method for controlling the wind power system according to an embodiment of the present invention.
Fig. 6 is a flowchart illustrating the method for controlling the wind power system according to an embodiment of the present invention.

### DETAILED DESCRIPTION OF THE INVENTION

Hereinafter, embodiments of the present invention will be described by using the drawings. In the respective drawings, the same sign is assigned to the same configuration, and the detailed description of overlapping portions will be omitted.

### First Embodiment

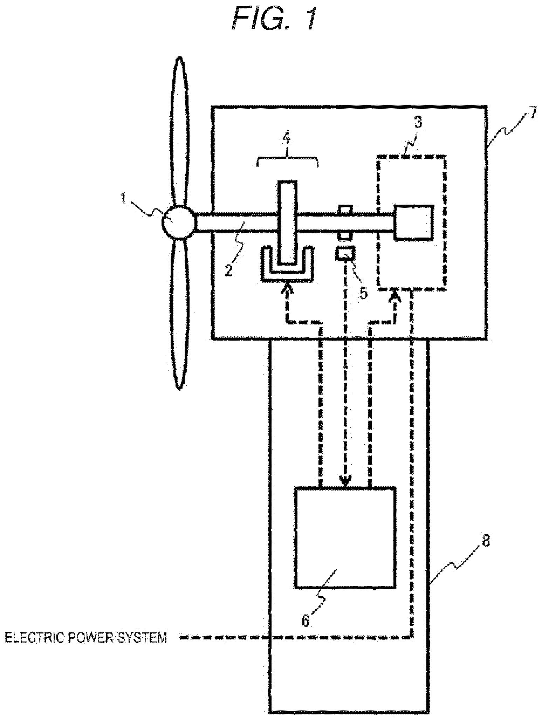

First, an example of a device configuration and a control target of a wind turbine to which the present invention is applied will be described by using Fig. 1. A rotation portion of the wind turbine includes a rotor 1 that is configured of a plurality of blades and a hub connecting the plurality of blades to each other at the center thereof, a drive train 2 that transmits rotation torque (power) of the rotor 1, and a generator 3 that extracts energy from the power of the drive train 2. The rotor 1 rotates by receiving the wind, and the rotation torque (power) of the rotor 1 is transmitted to the generator 3 by the drive train 2, and the power generation operation is performed. The generator 3 has a structure in which generator torque is changeable.

In Fig. 1, only a rotation shaft is illustrated as the drive train 2, but the present invention can be also applied to a case of providing an accelerator (gear box). In the drive train 2, a brake 4 that brakes the rotation torque (power), and a rotation speed sensor 5 that detects a rotation speed are installed.

A control apparatus 6 can give an ON command and an OFF command to the brake 4, and a torque command to the generator 3, based on a reading value of the rotation speed sensor 5 or the like. Moreover, the control apparatus 6 can control timing at which the ON command and the OFF command are given to the brake 4, and timing at which the torque command is given the generator 3, based on the reading value (rotation speed) of the rotation speed sensor 5 and a rotation acceleration speed which is calculated on the basis thereof.

That is, the control apparatus 6 can control braking force which is applied to the drive train 2, and the timing at which the braking force is added, by the ON command and the OFF command to the brake 4 and the torque command to the generator 3, based on the reading value of the rotation speed sensor 5 or the like. Here, the braking force includes not only the braking force by the brake 4 but also the generator torque (load) of the generator 3.

The generator 3 is connected to an electric power system, and transmits the generated electric power to the electric power system. The rotation portion described above is provided in a nacelle 7, and the nacelle 7 is supported by a tower 8 to be rotatable depending on a wind direction change within a horizontal plane.

The present invention is devised in order to suppress a vibration of the drive train when the generator torque is sharply changed due to a system accident or the like. Regarding the system accident, included are a case (FRT: Fault Ride-Through) where a system voltage is recovered in a short time (for example, within one second) and the power generation is continued, and a case of a so-called grid loss where decrease in the system voltage continues for a long period (for example, several minutes or even longer period).

The present invention relates to a control during a period until a lapse of a predetermined time (for example, several seconds) from recovering of the voltage after a voltage decrease of the electric power system, and is different from a control of a drive train damper that gives the torque command so as to negate the vibration of the drive train at the time of a system connection in the related art.

According to the study of inventors of the present invention, the timing for applying the torque (braking force) to the vibrating generator side is important in order to effectively suppress a torsional vibration of the drive train 2. If the torque is applied when the rotation speed of the drive train 2 is accelerated, it is possible to suppress the vibration, but on the contrary, if the torque is applied when the rotation speed is decelerated, the vibration is amplified, and in the worst case, there is a concern to damage to the device such as the generator 3 or the accelerator.

In the fault ride-through (FRT) control in which the system voltage is recovered in a short time and the power generation is continued, it is effective to raise the torque of the generator at the suitable timing. A method for setting the timing with a timer is also effective as described later, but since the system voltage change at the time of the FRT control is considered to be changed depending on system characteristics of a construction site of the wind turbine or events at that time, it is desirable that the timing is automatically adjusted.

The most suitable solution considered by the inventors of the present invention is to calculate a torque component that negates the vibration of the drive train by performing a feedback control of a measured value of the rotation speed, and to make a final generator torque command value by adding the calculated torque component to a torque increase for recovering the electric power in an overlapped manner.

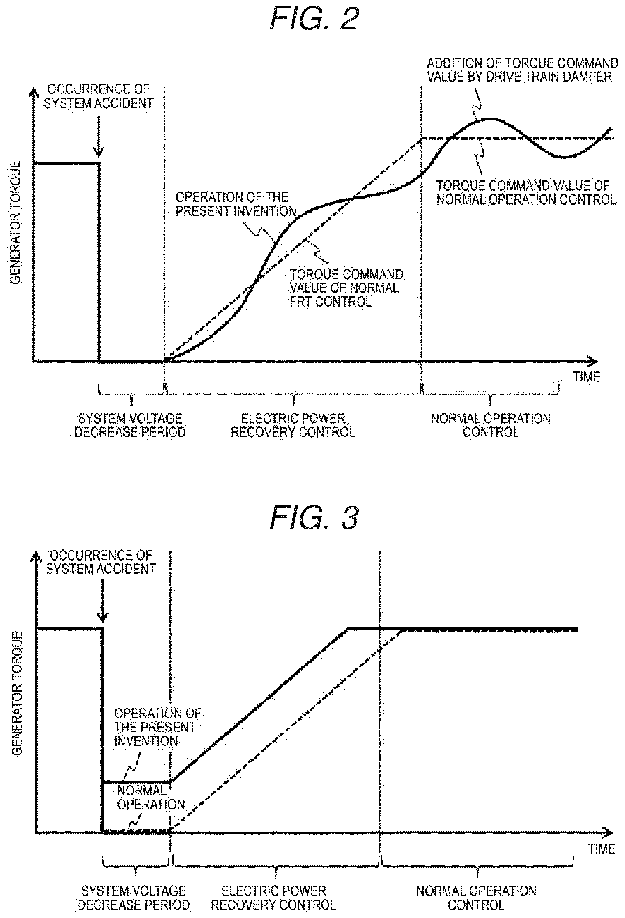

Fig. 2 illustrates a method for controlling the wind power system at the time of the system voltage recovery according to the present invention. Fig. 2 illustrates a time series change of the generator torque at the time of the FRT control, and illustrates normal operation (dotted line of Fig. 2) which is raised in a line shape when the system voltage is recovered and the generator torque is raised, and operation (solid line of Fig. 2) of the present invention by adding the command value of the drive train damper thereto in the overlapped manner.

As illustrated in Fig. 2, in a case where the system voltage is recovered after a lapse of a predetermined period of the system voltage decrease after the system accident occurs, the process is transferred to an electric power recovery control. At that time, as illustrated by the solid line, brake timing of the brake 4, and a torque value and change timing of the generator torque of the generator 3 are controlled so as to negate the vibration which occurs in the drive train.

The torque component which negates the vibration of the drive train may be added by controlling the brake timing of the brake 4 and the change timing of the generator torque of the generator 3 at the same time, or the torque component which negates the vibration may be added by controlling any one of the brake timing and the change timing. The control apparatus 6 determines which control is more effective depending on the measured value of the rotation speed of the drive train 2.

After the electric power recovery control, the process is transferred to a normal operation control, but in the normal operation control, an operation control to which the torque command value is added by the drive train damper is performed, as illustrated by the solid line of Fig. 2.

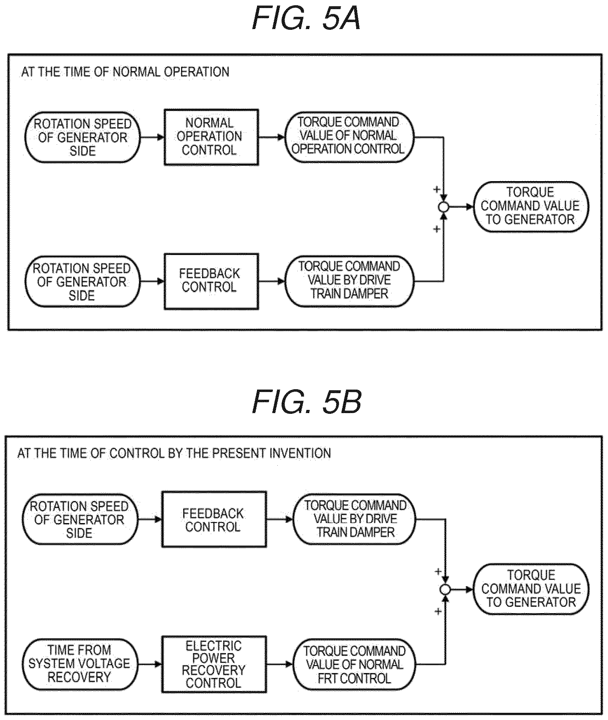

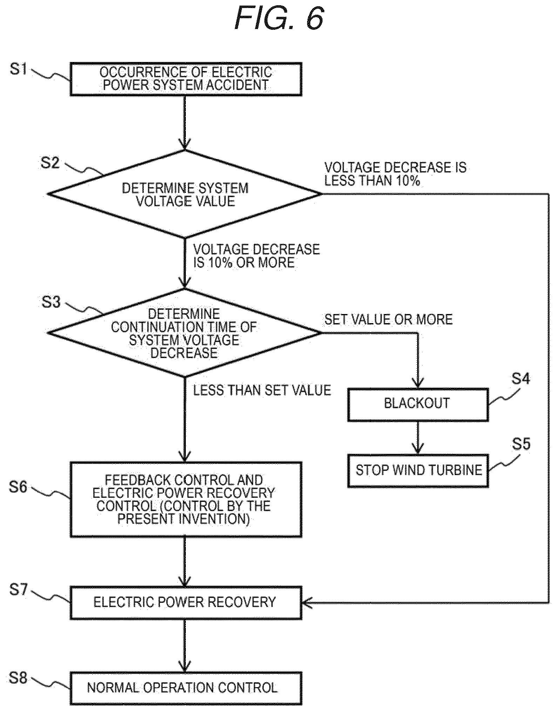

By using Fig. 5A to Fig. 6, the method for controlling the wind power system described above will be described. Fig. 5A is a block diagram illustrating the method for controlling the wind power system at the time of the normal operation. Fig. 5B is a block diagram illustrating the method for controlling the wind power system according to the present invention. Fig. 6 is a flowchart illustrating the method for controlling the wind power system according to the present invention.

In a case where an electric power system accident occurs (step S1), the process is transferred to step S2, and a system voltage value is determined. In a case where the voltage decrease of the system voltage is less than a predetermined value (less than 10%, here), the voltage decrease is determined to be with in a range of normal voltage fluctuation and the process is transferred to step S7, and the normal operation is continued. On the other hand, in a case where the voltage decrease is the predetermined value or more (10% or more, here), it is determined as a system abnormality, and the process is transferred to step S3.

In step S3, continuation time of the system voltage decrease is determined. In a case where the continuation time of the system voltage decrease is equal to or greater than a preset set value (for example, several seconds), since the FRT control is not possible, a blackout of the electric power system is determined (step S4), and the wind turbine is stopped (step S5). On the other hand, in a case where the continuation time of the system voltage decrease is less than the preset set value, the control according to the present invention, that is, the torque component that negates the vibration of the drive train is calculated by performing the feedback control of the measured value of the rotation speed, and the calculated torque component is added to the torque value by the normal electric power recovery control in the overlapped manner, and thereby, the electric power recovery control is performed (step S6).

After the electric power recovery of the system electric power (step S7), the process is transferred to the normal operation control (step S8), and the normal operation control is continued.

As described above, according to the embodiment, since it is possible to automatically control the generator torque at the suitable timing, when the generator torque is sharply changed due to the system accident or the like, it is possible to effectively suppress the vibration of the drive train, and it is possible to prevent the damage of the device such as the generator or the accelerator.

### Second Embodiment

By using Fig. 3, a method for controlling a wind power system according to a second embodiment will be described. Fig. 3 illustrates the time series change of the generator torque at the time of the FRT control, and illustrates the normal operation (dotted line of Fig. 3) in which the generator torque becomes 0 when the system voltage decreases, and the operation (solid line of Fig. 3) of the embodiment in which the torque is left as much as possible.

In order to suppress the vibration of the drive train at the time of the system accident, it is effective to suppress impact force which is applied to the drive train by making a reduction amount of the generator torque as small as possible immediately after the system accident occurs, as illustrated in Fig. 3. According to the study of the inventors of the present invention, the following two methods are effective in order to achieve the object thereof.

Firstly, in a case where a residual voltage is present in the system at the time of the system accident, there is a method in which the generator torque is made depending on the residual voltage, and thereby, the generated electric power flows through the system. For example, in a case where the system voltage remains as 50% of that before the system accident, there is a state where the generator torque is output as 50% of that before the system accident. As a result, it is possible to reduce a difference between the generator torque before the system accident and the generator torque after the system accident.

Secondly, there is a method in which an electric power consumption device is electrically connected to the generator, and the torque is made by the generator as an amount of the electric power which is consumed by the electric power consumption device at the time of the occurrence of the system accident. The method can be used in combination with the method for making the generator torque depending on the residual amount of the system voltage, but in particular, an advantage of the method is great at a point in which the generator torque is made even in a case where the system voltage becomes 0.

### Third Embodiment

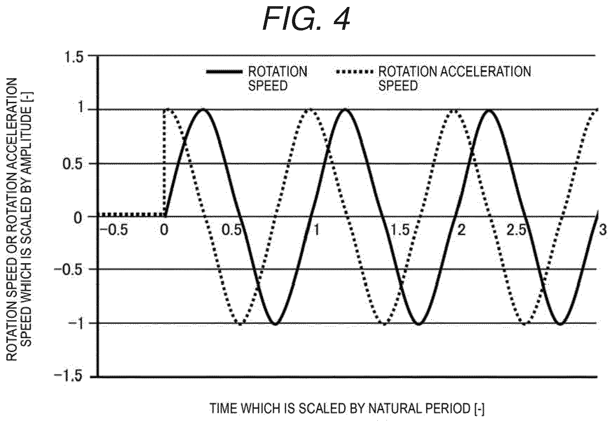

By using Fig. 4, a method for controlling a wind power system according to a third embodiment will be described. Fig. 4 is a diagram illustrating temporal transitions of the generator rotation speed and the generator rotation acceleration speed by the torsional vibration of the drive train after the system accident.

As a method for timely applying torque to the vibration side of the drive train, it is considered to set the timer in advance, in addition to the method for performing the feedback of the reading value of the rotation speed in the first embodiment. Since a response to the command is relatively fast in the generator torque, the automatic control by the reading value is effective as that of the first embodiment, but in particular, since the response is relatively slow in the brake, it is also effective to set the timing in advance. As a method for adjusting the timing of the brake, there are two ways of a method for adjusting the timing of the brake command, and a method for adjusting the brake response.

According to the study of the inventors of the present invention, it is found out that the vibration is suppressed if it is carried out to increase the load torque of a vibration portion, that is, to raise the generator torque or to apply the brake when the rotation acceleration speed is positive, and it is carried out to reduce the load torque of the vibration portion, that is, to lower the generator torque or to release the brake when the rotation acceleration speed is negative. In this case, it is clear that the torque changes the acceleration speed.

If the load torque is released stepwise at time 0 by the system accident, and thereafter, there is no torque change, and there is no damping, the rotation speed and the rotation acceleration speed of the drive train are changed as illustrated in Fig. 4.

Therefore, if the load torque is applied when the rotation acceleration speed is positive, that is, ina± 1/4 period before and after a quarter of an integer multiple of a natural frequency (natural period) of the drive train, the vibration is suppressed. In particular, if the load torque is applied at the time when the rotation acceleration speed is great, that is, at the time of the integer period of the natural period, the effect is great.

On the other hand, if the load torque is released when the rotation acceleration speed is negative, that is, in a ± 1/4 period of an integer and half multiple of the natural frequency (natural period) of the drive train, the vibration is suppressed. In particular, if the load torque is released at the time when the rotation acceleration speed is small, that is, at the time of the integer and half multiple of the natural period, the effect is great.

The present invention is not limited to the above embodiments, and includes various modification examples. For example, the above embodiments are described in detail for the explanation which is easy to understand the present invention, and are not necessarily limited to the embodiment including all of the configurations described. Moreover, a portion of the configuration of a certain embodiment can be replaced with the configurations of other embodiments, and the configurations of other embodiments can be added to the configuration of a certain embodiment. Furthermore, it is possible to add, delete, or replace other configurations with respect to a portion of the configuration of each embodiment.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A wind power system which is connected to an electric power system, the system comprising:
a rotor (1) that rotates by receiving wind;
a drive train (2) that transmits power of the rotor (1) ; and
a control apparatus (6) that controls braking force applied to the drive train (2),
wherein the control apparatus (6) controls the braking force to negate a vibration which occurs in the drive train (2), in a case where a voltage decrease occurs in the electric power system, and the voltage decrease is recovered within a predetermined time.

2. The wind power system according to Claim 1, further comprising:
a brake (4) that brakes rotation of the drive train (2) ; and
a generator (3) that operates power generation by the power transmitted from the drive train (2), and enables to change generator torque,
wherein the control apparatus (6) controls at least one of brake timing of the brake and change timing of the generator torque to negate the vibration which occurs in the drive train (2), in the case where the voltage decrease occurs in the electric power system, and the voltage decrease is recovered within the predetermined time.

3. The wind power system according to Claim 1 or 2, wherein the control apparatus (6) controls the braking force to apply decelerating torque to the drive train (2) in a case where a rotation speed of the drive train (2) increases after recovering of the voltage decrease.

4. The wind power system according to any one of Claims 1 to 3,
wherein the control apparatus (6) controls the braking force to apply accelerating torque to the drive train (2) in a case where the rotation speed of the drive train (2) decreases after recovering of the voltage decrease.

5. The wind power system according to Claim 1, further comprising:
a generator (3) that operates power generation by the power transmitted from the drive train (2), and enables to change generator torque,
wherein the control apparatus (6) controls the generator torque depending on a system voltage value at the time of the voltage decrease.

6. The wind power system according to any one of Claims 2 to 5, further comprising:
an electric power consumption device that is electrically connected to the generator (3),
wherein the generator torque is made by consuming the electric power which is generated by the generator (3) with the electric power consumption device.

7. The wind power system according to any one of Claims 2 to 6,
wherein the control apparatus (6) overlaps a torque command value component to negate the vibration which occurs in the drive train (2) on a normal torque command value to the generator (3), after recovering of the voltage decrease.

8. The wind power system according to Claim 1 or 2,
wherein the control apparatus (6) adds decelerating torque to the drive train (2) after a lapse of a predetermined time from the voltage decrease of the electric power system, based on a natural frequency of the drive train (2).

9. The wind power system according to Claim 8,
wherein the predetermined time is within a period before and after a quarter of an integer period of a torsional vibration from a vibration start of the drive train (2).

10. The wind power system according to Claim 9,
wherein the predetermined time is within a period before and after a quarter of one period of the torsional vibration from the vibration start of the drive train (2).

11. The wind power system according to Claim 1 or 2,
wherein the control apparatus (6) adds accelerating torque to the drive train (2) after a lapse of a predetermined time from the voltage decrease of the electric power system, based on a natural frequency of the drive train (2).

12. The wind power system according to Claim 11,
wherein the predetermined time is within a period before and after a quarter of an integer period and a half of a torsional vibration from a vibration start of the drive train (2).

13. The wind power system according to Claim 12,
wherein the predetermined time is within a period before and after a quarter of 1.5 period of the torsional vibration from the vibration start of the drive train (2).

14. A method for controlling a wind power system which is connected to an electric power system, the method comprising:
controlling braking force that is applied to a drive train (2) to negate a vibration which occurs in the drive train (2) of the wind power system, in a case where a voltage decrease occurs in the electric power system, and the voltage decrease is recovered within a predetermined time.

15. The method for controlling a wind power system according to Claim 14, the method further comprising:
controlling at least one of brake timing of the brake (4) of the drive train (2) and change timing of generator torque to negate the vibration which occurs in the drive train (2) of the wind power system, in the case where the voltage decrease occurs in the electric power system, and the voltage decrease is recovered within the predetermined time.

16. The method for controlling a wind power system according to Claim 14 or 15, the method further comprising:
controlling the braking force to apply decelerating torque to the drive train (2) in a case where a rotation speed of the drive train (2) increases after recovering of the voltage decrease.

17. The method for controlling a wind power system according to any one of Claims 14 to 16, the method further comprising:
controlling the braking force to apply accelerating torque to the drive train (2) in a case where the rotation speed of the drive train (2) decreases after recovering of the voltage decrease.
